Europäisches Patentamt

European Patent Office

Office européen des brevets

(19)

(11) **EP 1 215 146 A1**

(12) **EUROPEAN PATENT APPLICATION**

(43) Date of publication:
**19.06.2002 Bulletin 2002/25**

(51) Int Cl.$^7$: **B65G 51/03**, B65G 21/20

(21) Application number: **01310532.5**

(22) Date of filing: **17.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.12.2000 GB 0030690**

(71) Applicant: **Ling Systems Limited**
**St. Neots PE19 8GD, Cambridgeshire (GB)**

(72) Inventor: **Arnold, Steven**
**St. Neots PE19 1LN, Cambridgeshire (GB)**

(74) Representative: **Martin, Philip John**
**Marks & Clerks,**
**57-60 Lincoln's Inn Fields**
**London WC2A 3LS (GB)**

(54) **Compressed air conveyor**

(57)     In a compressed air conveyor of the type which conprises a supply of compressed air 2, a track comprising a plurality of air passage 3,4,5 each air passage being connected to the supply of compressed air 2, and configured to provide a jet of air with a substantial component of motion in the direction of the track and guide means for suspending the article so that in use the article is propelled by the air jets along the track while suspended by the guide means, the guide means comprising guide parts 6 and 7, means are provided for altering the distance between the guide part 6 and 7 in curved sections.

Each guide part 6, 7 comprises at least two guide sections 10 and 11 and 12 and 13 which can be moved radially towards or away from one another. At least one movable section 18,19 is provided for insertion between the guide sections 10 and 11 and 12 and 13. This can be done automatically, so that the circumferential length of the guide part can be altered automatically when the respective guide part is moved towards or away from the other guide part.

Fig. 1

**Description**

The present inventions relates to a compressed air conveyor, particularly suited for conveying articles such as plastic containers for example bottles.

Compressed air conveyors are known, for example from US 5421 678, which comprise a supply of compressed air and a track which comprises a plurality of air passages which are connected to the supply of compressed air, each air passage being configured to provide a jet of air with a substantial component of motion in the direction of the track. Such conveyors have advantages over other types of conveyor such as belt conveyors, as they have very few moving parts.

The plurality of air passages are typically arranged to form a first series which lie along the horizontal part of the track and two other series formed in vertical faces either side of the horizontal part of the track. The track is suitably configured so that it faces downwards.

Compressed air conveyors of this type are particularly suitable for conveying containers of the type which have a suspending formation at the top. For example, bottles are typically formed with an annular flange around the neck of the bottle. The track is provided with guide means comprising a pair of guide parts of indefinite length spaced apart by a specified distance. The distance is fixed so that it is less than the diameter of annular flange so that a bottle can be supported on the guide parts by the annular flange. The guide parts are positioned in relation to the track so that the top part of the bottle will be acted upon by the air jets and propelled along the track.

A compressed air conveyor for articles such as bottles is most suitably configured so that the horizontal part of the track with the air passages faces downwards, the guide means being placed below the track.

A complete compressed air conveyor for conveying article such as plastic bottles will typically comprise a number of straight sections and a number of curved sections.

Conventional compressed air conveyors are often used to transport different sizes of articles (for example, bottles with different flange sizes) at different times. In order to achieve this, the specified distance between the guide parts has to be altered. In straight sections, the distance between the guide parts can be altered automatically, by the operation of servos for example.

However, great difficulty has been encountered in providing an automatic system for changing the specified distance between the guide parts in curved sections. Obviously, as each guide part is moved radially inwards or outwards, means should be provided for changing its curvature and for varying the length of the arc defined by the guide part. This has not proved possible in the past.

Typically, a separate set of guide parts is provided for each specified distance. If it is desired to change the specified distance, it is necessary to change the set of guide parts used. This is inevitably time consuming and leads to the conveyor being out of action for long period.

The present inventors have found that the specified distance in curved sections of the guide means can be altered automatically by forming each guide part of at least two guide sections, a movable section being provided for insertion between the guide sections to increase the circumferential length of the guide part. It is found that this can be achieved automatically and that the resulting track has an acceptable geometry, along which an article may be propelled acceptably smoothly and quickly.

Accordingly, the present invention provides a compressed air conveyor comprising:

a supply of compressed air;
a track, comprising a plurality of air passages, each air passage being connected to the supply of compressed air, each air passage being configured to provide a jet of air with a substantial component of motion in the direction of the track;
guide means for suspending an article, so that, in use, the article is propelled by the air jets along the track while suspended by the guide means,
the track and the guide means including at least one curved portion of at least 5°, the guide means comprising two separate guide parts located on either side of a centre line, the guide parts being spaced from the centre line by a specified distance, each guide part comprising at least two guide sections, means being provided for moving the guide sections radially towards or away from the centre line,

wherein, in each guide part, at least one removable section is provided for insertion between the guide sections, means being provided for moving the removable section between the respective guide sections to increase the circumferential length of the guide part in the curved portion or remove the removable section from between the respective guide sections to decrease the circumferential length of the guide part in the curved portion, when the respective guide part is moved towards or away from the centre line.

The present invention allows each of the guide parts to be separated from a centre line by a selected one of a minimum and a maximum specified distance. This allows the guide parts to be separated from one another by at least two distances. Preferably, the minimum specified distance for the first guide part is the same as the minimum distance for the second guide part. The guide parts may then be separated from one another by twice the minimum specified distance or by twice the maximum specified distance. In the larger of the two specified distances, the guide part on the inside of the curve comprises the at least two abutting guide sections, with the respective movable section removed. The guide part on the outer side of the curve will comprise the at least two guide sections with the movable section inserted between them.

In order to decrease the specified distance, it is necessary to move the guide part on the inside of the curve closer towards the centre line (i.e. increase the circumferential length) and to move the guide part on the outside of the curve closer towards the centre line (i.e. decrease the circumferential length). To do this, the guide sections on the inside of the curve are moved towards the centre line and the movable part is inserted between them to increase the circumferential length, whilst the guide sections on the outside of the curve are moved closer to the centre line, the movable part being removed from the guide part so that the respective guide sections abut one another.

The guide parts may be of indefinite length. The guide parts will include at least one curved portion. The present invention allows the circumferential length of the guide parts in the curved portion to be changed. The guide parts may extend for an indefinite length outside the curved portion.

Means are provided for moving each of the guide sections and movable sections. The removable sections may be moved automatically, that is, without manipulation of the removable section by an operator. The moving means can be controlled automatically allowing the specified distance to be increased or decreased at will very quickly.

It will be understood that, the terms "first circumferential length" and" "second circumferential length" are used to denote the arc length of the curve even if the curve is not a true section of a circle.

The track is preferably a conventional design of track, as described above, comprising a first set of air passages arranged in succession along a substantially horizontally extending face, and two further sets of air passages each arranged in succession along substantially vertically mounted faces, so that a substantially U shaped channel is formed, the U shaped channel facing downwards.

The guide means should suspend the article so that a part of the article is positioned near or in the U shaped passage so that the air jets can act upon the article.

In addition to the guide parts, the guide means may comprise additional guide members along which other parts of a suspended article may pass. Preferably, the additional guide members do not support the article. This has two advantages. In the first place, the positioning of these guide members is less critical, as they are simply provided to smooth the passage of the article along the conveyor. Further, as they are not required to support any substantial weight, they can be made of thinner section material or of material which is relatively flexible, or they be made of overlapping sections, which allows the arc length of the additional guide members in curved sections to be changed relatively easily.

The curved portion may simply be a curved section joining two substantially straight sections. Alternatively, it may form part of a switching system in which two separate tracks of the compressed air conveyor join or birfurcate.

Control means may be provided for controlling the means for moving the guide sections and movable sections. Preferably, there is at least one means for moving each guide section and each movable section. It is particularly preferred that there are at least two means for moving each of the guide sections. In this case, if a guide section is provided with a flexible section, as described below, it is advantageous to have at least two means for moving the guide section.

Input means may be provided whereby an operator can select a suitable specify distance, the control means being configured to operate each means for moving the respective movable section or guide section to a pre-defined position suitable for the selected specified distance.

The supply of compressed air may comprise any suitable means, for example a fan blower. Preferably, it is an electrically powered fan blower. The track may be made of any suitable material. Preferably, it is constructed of metal, for example stainless steel which is easy to keep clean.

In order to improve the approximation of the shape of the track to a true circle, the guide sections may be made partly flexible. This is preferably achieved by providing at least one guide section ( and preferably all of the guide sections) with a portion of reduced radial thickness.

In order to flex the guide sections when they are moved, the means for moving the guide parts radially towards or away from one another may comprise means acting on at least two parts of each guide section, the means being controlled so that the two parts of the respective guide section are moved by different distances.

The means for radially moving the guide parts and the means for moving the removable sections are suitably operated by compressed air, servos, pneumatic, hydraulic, mechanical, electrical or any other means.

The present invention will be further described by way of example only with reference to the accompanying drawings, in which:

Figure 1 is plan view of a curved section of a compressed air conveyor according to the present invention, with the guide parts separated by first specified distance.

Figure 2 is a plan view of the compressed air conveyor of Figure 1, with the guide parts separated by a second specified distance.

Figure 3 is a vertical cross section through figure 1 along line III-III.

Figure 4 is a schematic view of a break in the additional guide parts.

Figure 5 is a diagrammatic view showing how the positions of the means for controlling the guide sections and livable sections are determined.

Figure 6 is a schematic representation of means for controlling the air conveyor of figure 3.

## DETAILED DESCRIPTION OF THE DRAWINGS

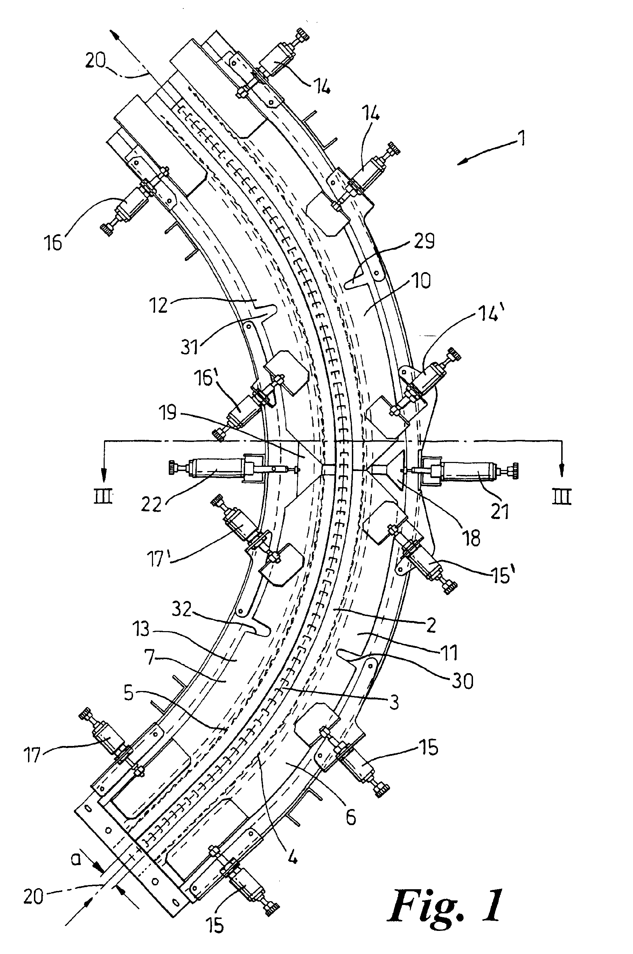

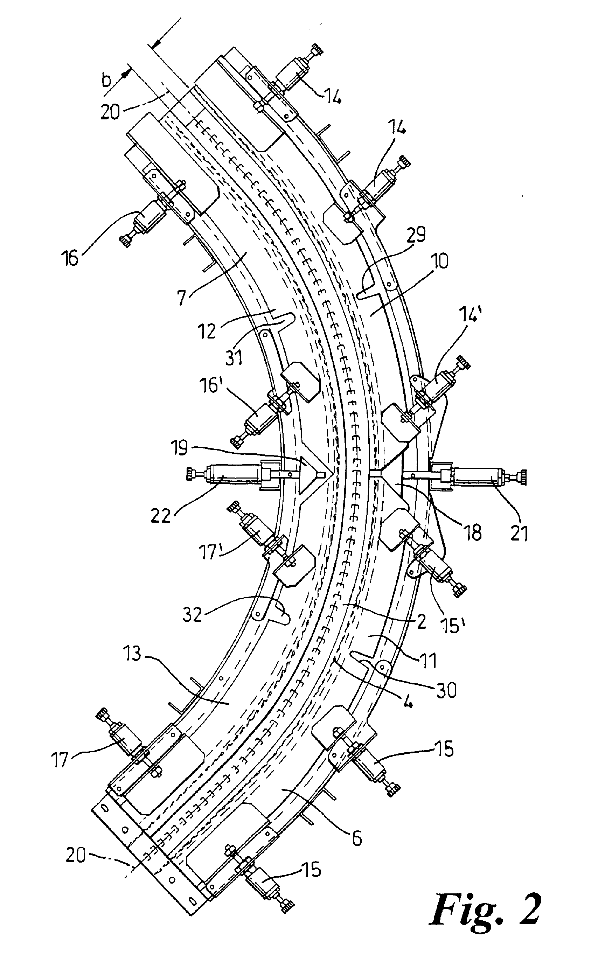

Both figure 1 and figure 2 show the compressed air conveyor viewed from underneath. In use, the compressed air conveyor will be configured so that the guide parts extend below the track so that a bottle can be suspended below the track and propelled along the track.

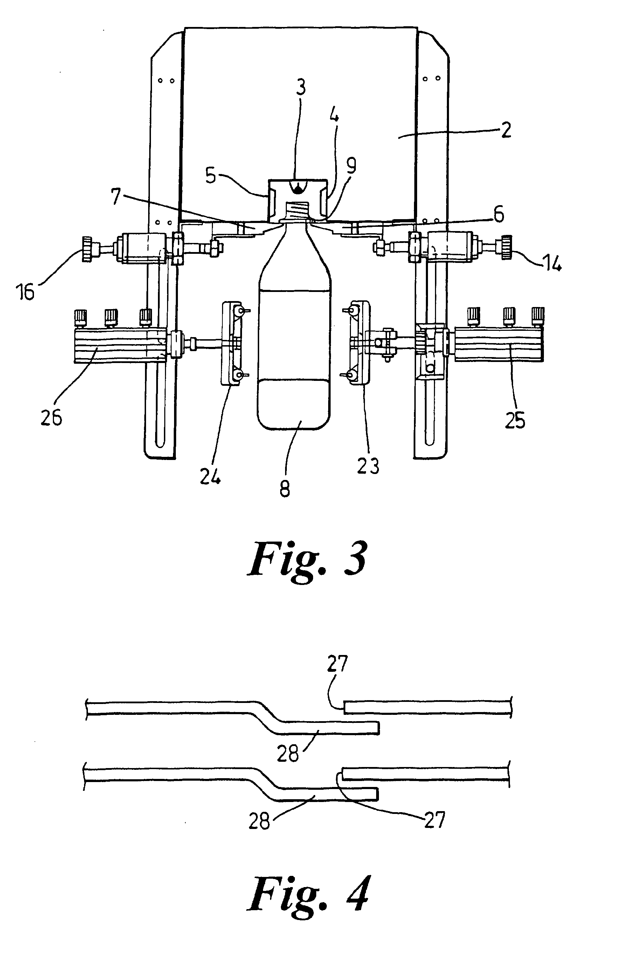

The conveyor, generally designated 1, comprises a body 2 which comprises a supply of compressed air. The body comprises a plurality of air passages connected to the supply of compressed air. There is a first series of air passages 3 extending along a substantially horizontal face and two further sets of air passages 4 and 5 in substantially vertically extending faces. Together, the substantially horizontally extending face 3 and the substantially vertically extending faces 4 and 5 define a downwardly facing U shaped track. The air passages are configured in a known manner to provide a jet of air with substantial component of motion along the direction of the track, shown by the arrow. In order suspend articles such as plastic bottles in the track by a suspending formation such as a flange around a bottle neck, guide means are provided comprising two guide parts. As shown in figure 3, a bottle 8 can be suspended by its annular neck flange 9 by the guide parts 6 and 7 so that the top is acted upon by air jets from the air passages 3,4,5.

The guide parts are made of relatively strong, thick material with a low coefficient of friction, as is well known in the art. A suitable material is available under the name CUSTOM PEROL (trade mark). In figure 1, the guide parts are shown separated by a specified distance (a).

Each guide part 6, 7 comprises a pair of guide sections, 10 and 11 and 12 and 13 respectively. Means 14, 14',15, 15', 16, 16' 17 and 17' are provided for moving the guide sections 10,11,12, and 13 respectively. In each guide part, at least one movable section 18, 19 is provided. The movable sections each comprise a truncated triangular section with a small rectangular sectioned formed at the truncated end. Removable section 19 is shown inserted between the respective guide sections 12 and 13 whereas removable section 18 is shown removed from the guide sections 10 and 11 so that the guide sections 10 and 11 abut each other directly. As shown in figure 1, guide sections 10 and 11 have been moved close to the central line 20 of the track so that the circumferential distance of the guide parts 6 is at the smaller value. Guide sections 12 and 13 have been moved towards the centre line 20. Means 21 and 22 are provided for moving the removable sections 18 and 19 respectively.

Figure 2 shows how the specified distance between the guide parts 6 and 7 can be increased to a higher value, (b).

The means 14, 14', 15 and 15' are actuated to move the guide sections 10 and 11 away from the centre line 20. The means 16, 16', 17 and 17' are actuated to move the guide sections 12 and 13 away from the centre line 20. In order to decrease the circumferential length of the guide part 7, the removable section 19 is removed. On the other hand, to increase the circumferential length of the guide part 7, the removable part 18 is inserted between the guide parts 10 and 11.

Control means (not shown) can be provided for automatically operating means 14,15,16,17,21 and 22 to increase or decrease the specified distance a/b at will.

Figure 3 also shows additional guide members 23 and 24, along which the sides of the bottle 8 can pass. The additional guide means 23 and 24 do not support the weight of the bottle. Means 25 and 26 are provided for automatically increasing or decreasing the separation between the additional guide parts 23, 24. Variations in curvature over curved sections can be accommodated by using additional guide members 23 and 24 formed of relatively flexible material. Variations in arc lengths as the distance between the additional guide members 23 and 24 is altered can be accommodated by providing breaks 27 in the additional guide members, with short overlapping sections 28 at the break to provide continuous guide surfaces, as shown in figure 4.

In order to improve the approximation of the form of the guide parts 6 and 7 to a true section of a circle, the curvature can be affected. This is achieved as follows. Cut outs 29,30,31 and 32 are formed in the guide sections 10,11,12 and 13 respectively. The distance of travel of the means 14, 14',15, 15',16, 16', 17 and 17'can be controlled so that the movement of the respective guide part, for example guide section 10, close to the centre of the curved section, is smaller compared to the movement of parts of the guide section 10 at the far end of the guide section. To this end, the means 14 can be controlled to have a greater travel than the means 14'.

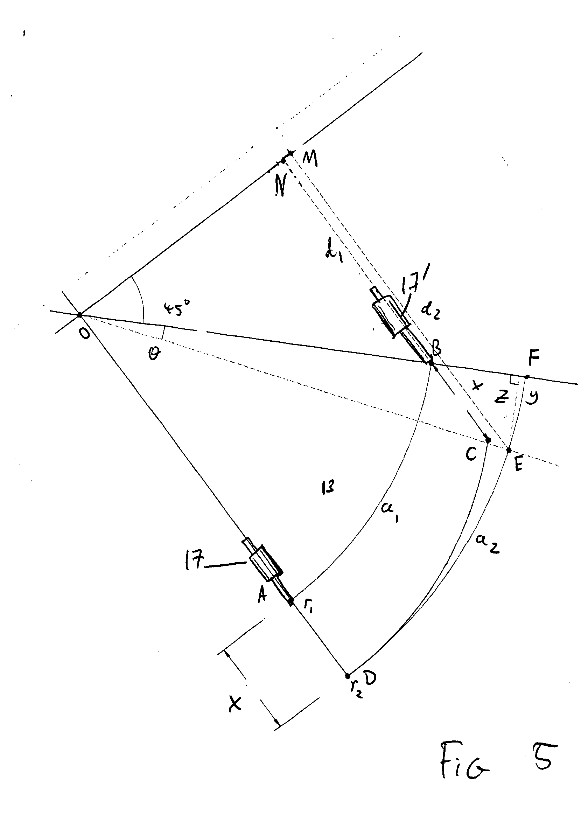

Figure 5 is diagrammatic illustration showing how various distances are calculated. In figure 5, two positions of the guide section 13 are shown.

O represent the notional centre of curvature of the guide section. A represents the position of a first end of the guide section 13 when at a first, minimum radius, $r_1$. B represents the other end of the guide section 13 when in this position. $a_1$ is the arc length separating positions A and B

In its position of minimum radius of curvature, the guide section 13 extends through an angle of 45°.

The pneumatic cylinders 17 and 17' are also shown. These are configured to displace the respective ends of the guide Section 13. Pneumatic cylinders 17 and 17' operate in a substantially parallel direction. Pneumatic cylinder 17 can be used to move the position of the lower end of the guide section 13 from position A to position D, representing the maximum radius of curvature, distance $r_2$ which is separated from position A by a linear distance X.

If pneumatic cylinder 17' were similarly operated move the upper end of the guide section 13 by the same distance X, it would move from position B to position C.

Position E marks the position of the upper end of the guide section 13 if it were moved so that its end came to rest at a radius of $r_2$ from the centre 0. It can be seen that there is a small distance between position C and position E. When radius of curvature $r_1$ is large, the distance between position C and E may be small. In this case, no further alteration to the position of the upper part of the guide means 13 need be made, because, it will be still be possible to direct articles along the conveyor without interruptions.

However, sometimes, it is necessary to move the upper end of the guide section 13 so that it coincide exactly with position E. $d_1$ represents the notional distance between position B and a notional base line at N. Distance $d_2$ represents the distance between position E and the notional base line at M. To a close order of approximation, the difference between distances $d_2$ and $d_1$ represents the amount by which pneumatic cylinder 17' must move the upper end of the guide section in order for it to arrive at position E.

Also shown in figure 5 is the position F at which the upper end of the guide section 13 would come to rest if it were moved radially away from the origin 0 by the distance X. The distance y between points E and F represents the increased arc length which must be allowed for by inserting the movable section 22 to allow for the increase in radius of curvature. In practice distance y will be approximated by linear distance z, which in practice is not significantly different to it.

As the apparatus shown in figure 1 and 3 comprises two guide sections 12 and 13 which will be moved in exactly corresponding ways, the actual length of the end of the movable section 22 which must be inserted between them to allow for the increase in radius of curvature will be 2z.

Each of $r_1$, $r_2$, and X is known and it is desired to find $d_1$, $d_2$ and z.

It can be shown that $d_1 = r_1 \sin 45°$

If θ is known, it can be shown that:

$$Z = (r1 + X) \sin \theta$$

and

$$d2 = (r1 + X) \sin (45° + \theta)$$

θ can be calculated as follows and then inserted into the formulae above: -

$$\theta = 45\ x/(r_1 + X).$$

In all cases, θ is quote in degrees.

Once this has been determined, control means maybe configured to move the guide section 13 from its position of minimum radius to its position of maximum radius by controlling the pneumatic cylinder 17 so that its piston moves through a distance X and by controlling the pneumatic piston 17' so that its piston moves through a distance $d_2 - d_1$

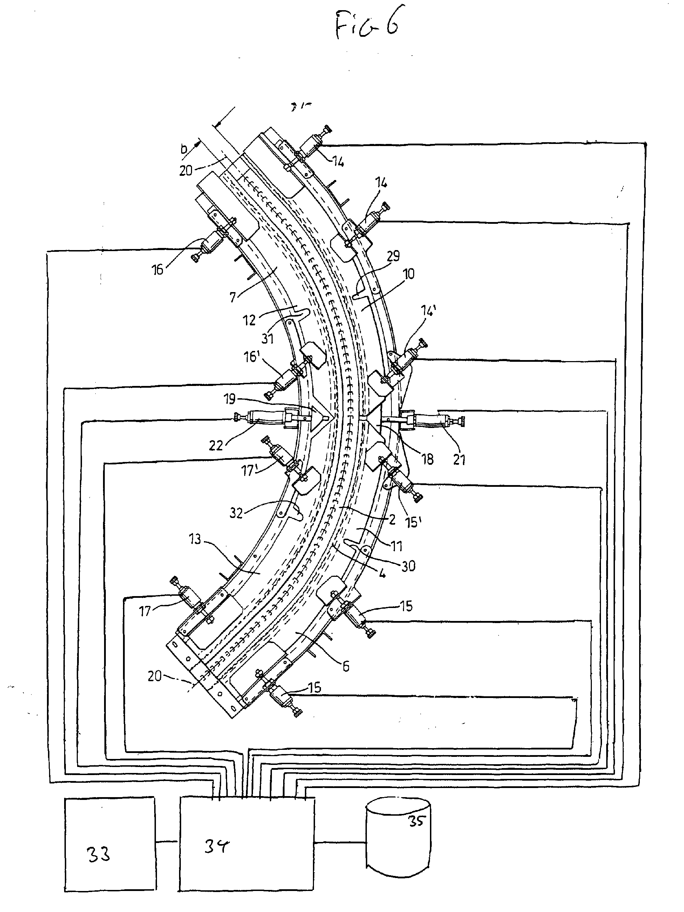

Figure 6 is a schematic view of the compressed air conveyor of figure 3 showing the distance for controlling the compressed air conveyor. 33 represent an input means, whereby a user may input a selection of the specified distance between the guide parts. 34 represents a processor configured to receive inputs from the input means 33. Processor 34 is further connected to a data store 35. In the data store, the position of each of the pneumatic cylinders 14, 14', 15, 15', 16, 16', 17, 17' and cylinders 22 and 21 necessary for each specified distance are stored. When the processor 34 receives an instruction from the input 33 to change the specified distance, the processor reads from the data store 35 the position of each pneumatic cylinder and transmits an instruction along the lines shown to each pneumatic cylinder, so that its piston is moved to the required position.

The present invention has been described above by way of example only and modifications can be made within the invention.

### Claims

1. A compressed air conveyor comprising:

    a supply of compressed air;
    a track, comprising a plurality of air passages, each air passage being connected to the supply of compressed air, each air passage being configured to provide a jet of air with a substantial component of motion in the direction of the track;
    guide means for suspending an article, so that, in use, the article is propelled by the air jets along the track while suspended by the guide means,
    the track and the guide means including at least one curved portion of at least 5°, the guide means comprising two separate guide parts located on either side of a centre line, the guide parts being spaced from the centre line by a specified distance, each guide part comprising at least two guide sections, means being provided for moving the guide sections radially towards or away from the centre line,

wherein, in each guide part, at least one removable section is provided for insertion between the guide sections, means being provided for moving the removable section between the respective guide sections to increase the circumferential length of the guide part in the curved portion or remove the removable section from between the respective guide sections to decrease the circumferential length of the guide part in the curved portion, when the respective guide part is moved towards or away from the centre line.

2.  A compressed air conveyor according to claim 1, wherein the guide sections are partly flexible.

3.  A compressed air conveyor according to claim 2, wherein the guide sections comprise portions of reduced radial thickness to provide flexibility.

4.  A compressed air conveyor according to claim 2 or 3, wherein the means for moving the guide parts radially towards or away from the centre line comprise means acting on at least two parts of each guide section, the means being controlled so that the two parts of the respective guide section are moved by different distances.

*Fig. 1*

*Fig. 2*

**Fig. 3**

**Fig. 4**

FiG 5

FiG 6

**European Patent Office**

## EUROPEAN SEARCH REPORT

Application Number

EP 01 31 0532

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | WO 01 68491 A (LAQUAY FABIEN ;NETRA SYSTEMS (FR); MALVOISIN HERVE (FR); DELAPORTE) 20 September 2001 (2001-09-20)<br>* page 3, line 17 - page 12, line 18 *<br>* figures 1-5 * | 1,2,4 | B65G51/03<br>B65G21/20 |
| A | FR 2 793 228 A (RAFALE TECHNOLOGIE) 10 November 2000 (2000-11-10)<br>* page 3, line 8 - page 7, line 31 *<br>* figures 1,2 * | 1-4 | |
| A | US 5 421 678 A (AIDLIN SAMUEL S ET AL) 6 June 1995 (1995-06-06)<br>* column 5, line 27 - column 8, line 50 *<br>* figures 1-8 * | 1 | |
| A | US 5 246 314 A (HILBISH BRIAN K ET AL) 21 September 1993 (1993-09-21)<br>* column 3, line 12 - column 7, line 8 *<br>* figures 1-14 * | 1 | |
| A | US 5 567 091 A (JOHNSON MIKE ET AL) 22 October 1996 (1996-10-22)<br>* column 3, line 13 - column 7, line 25 *<br>* figures 1-13 * | 2,3 | TECHNICAL FIELDS SEARCHED (Int.Cl.7)<br><br>B65G |

The present search report has been drawn up for all claims

| Place of search | Date of completion of the search | Examiner |
|---|---|---|
| THE HAGUE | 26 March 2002 | Papatheofrastou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 01 31 0532

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2002

| Patent document cited in search report | | Publication date | Patent family member(s) | | Publication date |
|---|---|---|---|---|---|
| WO 0168491 | A | 20-09-2001 | FR | 2806395 A1 | 21-09-2001 |
| | | | AU | 3563101 A | 24-09-2001 |
| | | | WO | 0168491 A1 | 20-09-2001 |
| FR 2793228 | A | 10-11-2000 | FR | 2793228 A1 | 10-11-2000 |
| | | | AU | 4574500 A | 21-11-2000 |
| | | | BR | 0006096 A | 20-03-2001 |
| | | | CN | 1315918 T | 03-10-2001 |
| | | | EP | 1094978 A1 | 02-05-2001 |
| | | | WO | 0068122 A1 | 16-11-2000 |
| US 5421678 | A | 06-06-1995 | NONE | | |
| US 5246314 | A | 21-09-1993 | US | 5161919 A | 10-11-1992 |
| | | | AU | 1108692 A | 25-02-1993 |
| | | | CA | 2061017 A1 | 07-02-1993 |
| | | | EP | 0526963 A1 | 10-02-1993 |
| | | | JP | 5162852 A | 29-06-1993 |
| US 5567091 | A | 22-10-1996 | NONE | | |

EPO FORM P0459